# EUROPÄISCHE PATENTANMELDUNG

(11) **EP 2 759 455 A2**
(43) Veröffentlichungstag der Anmeldung: **30.07.2014**
(21) Anmeldenummer: 14151647.6
(22) Anmeldetag: 17.01.2014
(51) Int. Cl.: B62B 5/00

(54) **Rollwagen für eine Maschine, insbesondere eine Baumaschine**

(30) Priorität: 23.01.2013 DE 202013100310 U
(71) Anmelder: Knauf PFT GmbH & Co. KG, 97346 Iphofen (DE)
(72) Erfinder: Duelli, Michael, 97447 Gerolzhofen (DE)
(74) Vertreter: Schröer, Gernot H.

(57) **Zusammenfassung**

Rollwagen für eine Maschine, insbesondere für eine Baumaschine, zum Beispiel eine Mörtelmischmaschine oder -mischpumpe, mit einem Rahmen (1) aus miteinander verbundenen Rahmenteilen (3), mit auf oder an dem Rahmen (1) angeordneten Maschinenkomponenten (5, 7, 9, 11) und mit wenigstens einer Wagenrolle (13), dadurch gekennzeichnet, dass der Rahmen (1) wenigstens ein Verbinderteil (23) zum Verbinden von wenigstens zwei Rahmenteilen (3) umfasst, an dem die Wagenrolle (13) angekoppelt oder ankoppelbar ist.

## Beschreibung

Die Erfindung betrifft einen Rollwagen für eine Maschine, insbesondere für eine Baumaschine, zum Beispiel eine Mörtelmischmaschine oder Mörtelmischpumpe nach dem Oberbegriff von Anspruch 1 bzw. Anspruch 9.

Eine solche beispielhaft genannte Mörtelmischpumpe ist unter der Modellbezeichnung PFT G4 bekannt. Diese Mörtelmischpumpe weist für einen stabilen Aufbau einen Rahmen auf, der aus miteinander verbundenen Rahmenteilen hergestellt ist. Diese Rahmenteile sind bei dieser bekannten Vorrichtung Metallrohre, welche zum Aufbau der Rahmenstruktur in den Rahmeneckbereichen miteinander verschweißt sind. An diesen Rahmen sind die für einen funktionsgerechten Betrieb erforderlichen Maschinenkomponenten und -systeme, wie zum Beispiel Mischbehälter, Pumpensystem, Förder-Mischsystem, Wassersystem, etc., angeordnet. Um diese Mörtelmischpumpe bewegen und an den Einsatzort bringen zu können, sind an der Rahmenunterseite Wagenrollen angebracht, wobei hierzu ein Radzapfen einer jeden Wagenrolle in das Innere eines Endbereichs eines zugeordneten vertikal angeordneten Rahmenrohrs nach vorheriger Aufweitung dessen Innendurchmessers eingesetzt wird.

Es ist Aufgabe der vorliegenden Erfindung, einen Rollwagen für eine Maschine der eingangs genannten Art anzugeben, bei welcher die mechanische Festigkeit weiter erhöht wird. Zudem soll das Herstellen des Rollwagens vereinfacht werden.

Die Aufgabe wird erfindungsgemäß bei einem Rollwagen für eine Maschine, insbesondere für eine Baumaschine, zum Beispiel eine Mörtelmischmaschine oder -mischpumpe, mit einem Rahmen aus miteinander verbundenen Rahmenteilen, mit auf oder an dem Rahmen angeordneten Maschinenkomponenten und mit wenigstens einer Wagenrolle dadurch gelöst, dass der Rahmen wenigstens ein Verbinderteil zum Verbinden von wenigstens zwei Rahmenteilen umfasst, an dem die Wagenrolle angekoppelt oder ankoppelbar ist.
Durch das vorgenannte Verbinderteil wird die gesamte Rollwagenkonstruktion weiter verstärkt. Auf diese Weise können durch eine geeignete Konstruktion dieses Verbinderteils die Verbindungsstellen beispielsweise durch Vergrößerung der Verbindungsflächen noch weitaus höhere mechanische Kräfte aufnehmen. Darüber hinaus wird auch der Herstellprozess des Rollwagens vereinfacht, da bei geeigneter Konstruktion des Verbinderteils lediglich entprechend abgelängte Rahmenteile an das Verbinderteil angekoppelt werden müssen. Eine besondere Bearbeitung von Rahmenteilen nach dem Ablängprozess zur Vorbereitung der Verbindung ist im Gegensatz zu der Ausführungsform gemäß dem Stand der Technik nicht erforderlich. Auch die Wagenrolle lässt sich auf einfache Weise an das Verbinderteil ankoppeln.

Eine besonders geeignete Ausführungsform sieht dabei vor, dass das Verbinderteil Aussparungen zur Aufnahme bzw. zum Einfügen von Endbereichen der Rahmenteile aufweist. In diesem Fall brauchen die Rahmenteile beim Aufbau des Rahmens lediglich in die Aussparungen eingesetzt und darin fixiert werden.

Für eine besonders gute Stabilität beim Rahmenaufbau kann ein massiv ausgestaltetes Verbinderteil sorgen, ein solches ist für sich betrachtet besonders verwindungssteif und kann auch besonders hohe mechanische Kräfte aufnehmen. Außerdem bietet eine massive Ausführungsform auch eine besonders große Ankopplungsfläche, so dass auch die daran angesetzten Rahmenteile besonders gut daran angeheftet werden können.

Das Verbinderteil kann durch Fräsen aus einem Massivblock erzeugt sein. Besonders kostengünstig ist es jedoch als Gussteil, insbesondere als Metallgussteil, hergestellt.

Vorzugsweise bestehen oder umfassen die Rahmenteile Metallrohre oder - stäbe, die mit dem Verbinderteil verschweißt oder verlötet sind. Für eine gegebenenfalls zerlegbare Rahmenstruktur kann alternativ auch eine Schraubverbindung vorgesehen sein. Im Falle von Metallrohren kann es auch denkbar sein, dass das Verbinderteil anstelle von Aussparungen Zapfen aufweist, welche in die angekoppelten Rohrenden eingreifen. Die Rahmenelemente können in Abweichung von einer runden Rohr- oder Stabform auch als Drei-, Vier- oder Mehrkantrohre oder -stäbe ausgeführt sein.

Eine bevorzugte Ausgestaltung der Erfindung sieht vor, dass das Verbinderteil eine Aufnahme für einen Radzapfen der Wagenrolle zum insbesondere axial verschwenkbaren Ankoppeln derselben aufweist. Die Ankopplung erfolgt dabei günstigerweise derart, dass die Richtungsvektoren von Radzapfenachse und Wagenrollenachse orthogonal zueinander stehen. Radzapfenachse und Wagenrollenachse liegen dabei vorzugsweise nicht in einer Ebene, sondern sind in einer windschiefen Anordnung, damit der Rollwagen auch leichter lenkbar ist.

Zusätzlich oder alternativ zu einer der vorgenannten Ausgestaltungen wird die Aufgabe gemäß einem zweiten Aspekt der Erfindung bei einem Rollwagen für eine Maschine, insbesondere für eine Baumaschine, zum Beispiel eine Mörtelmischmaschine oder -mischpumpe, mit einem Rahmen aus miteinander verbundenen Rahmenteilen, mit auf oder an dem Rahmen angeordneten Maschinenkomponenten und mit wenigstens einer Wagenrolle dadurch gelöst, dass der Rahmen eine Aufnahme für einen Radzapfen der Wagenrolle zum insbesondere axial verschwenkbaren Ankoppeln derselben aufweist, wobei der Rahmen an der Ankoppelstelle eine flächenförmige, insbesondere tellerförmige, Verbreiterung aufweist, die mit einer flächenförmigen, insbesondere tellerförmigen, Verbreiterung an der Wagenrolle, insbesondere an einem Rollenblech der Wagenrolle, zusammenwirkt. Ein solches Zusammenwirken besteht dabei insbesondere aus einer besonders großflächigen Abstützung der Wagenrolle bei Biegebeanspruchungen, welche insbesondere beim Rollen des Rollwagens während seines Transports auf die Wagenrolle einwirken können, wenn diese gegen ein Hindernis wie zum Beispiel eine Bordsteinkante gerollt wird. Bei solchen Biegebeanspruchungen besteht die Gefahr des Bruchs des Radzapfens. Die vorgenannte großflächige Abstützung der Verbreiterung am Rollenblech an der Verbreiterung des Rahmens verhindert eine zu große Biegebewegung, so dass die Bruchgefahr deutlich minimiert ist.

Die Verbreiterung am Rahmen ist günstigerweise am Verbinderteil angeordnet. Auf diese Weise liegt eine einstückige Ausführungsform mit dem entsprechenden Kostenvorteil vor. Bei der Ausführungsvariante als Gussteil lässt sich die Verbreiterung einfach in der Form des Gusswerkzeugs vorsehen. Aber auch eine zweiteilige Ausführungsform ist denkbar, bei der am Verbinderteil ein gesonderter Fuß angekoppelt, zum Beispiel angeschweißt, ist, der die Verbreiterung umfasst.

Die Verbreiterung am Rollenblech kann in diesem integriert sein. Beim Einsatz einer handelsüblichen Wagenrollenanordnung mit entsprechend üblichem Rollenblech kommt dagegen eine zweiteilige Ausführung in Betracht, wobei als Rollenblechverbreiterung ein Aufsatzteil zur Anwendung kommt, das auf der Oberseite des Rollenblechs aufgesetzt und mit diesem gekoppelt ist. Das Rollenblech ist vorzugsweise aus einem Metallblech hergestellt, beispielsweise aus diesem ausgestanzt und insbesondere zur Versteifung mit einer Prägung versehen.

Um eine mögliche Biegebeanspruchung noch weitergehend zu minimieren, liegen die einander zugewandten Flächen der Verbreiterung des Rahmens und der Verbreiterung des Rollenblechs aufeinander auf. Alternativ kann ein besonders geringer Abstand, insbesondere im Bereich zwischen 0 mm und 5 mm, zwischen den einander zugewandten Flächen der Verbreiterung des Rahmens und der Verbreiterung des Rollenblechs vorteilhaft vorgesehen werden. Dadurch wird ein Anstoß einer Wagenrolle nahezu unmittelbar aufgefangen und die auftretenden Kräfte über die beiden Verbreiterungen in den Rahmen abgeleitet.

Da die vorgenannte Biegebeanspruchung des Radzapfens wegen der Verschwenkbarkeit der Wagenrolle um 360° in jede Richtung auftreten kann, sind vorteilhafterweise die einander zugewandten Flächen der beiden Verbreiterungen bei angekoppelter Wagenrolle parallel zueinander ausgerichtet. Eine Biegebewegung wird somit immer gleich schnell gebremst, egal in welcher Ausrichtung sich der Rollwagen beim Verschieben und Anstoßen der Wagenrolle befindet.

Die Erfindung wird im Folgenden anhand der Zeichnungen eines Ausführungsbeispiels näher erläutert. Dabei zeigen:
- Fig. 1: eine Mörtelmischpumpe in der Seitenansicht;
- Fig. 2: eine an der Mörtelmaschine von Fig. 1 angekoppelte Wagenrolle gemäß Einzeldarstellung X von Fig. 1 in der Ansicht von schräg hinten; und
- Fig. 3: die Wagenrolle gemäß Fig. 2 in seitlicher Querschnittdarstellung.

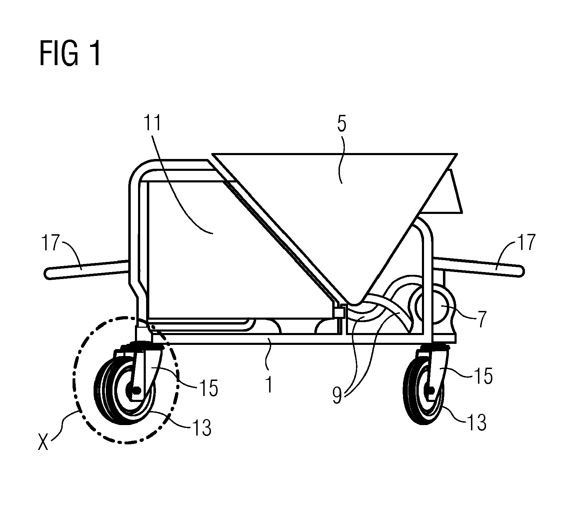

Eine Mörtelmischpumpe gemäß Fig. 1 zur Herstellung viskoser Baumaterialien aus einer Trockensubstanz weist einen Rahmen 1 aus Metallrohren 3 zur Anordnung von Maschinensystemen und -komponenten auf. Im wesentlichen sind ein trichterförmiger Einfüllbehälter 5, ein Luftkompressor 7, eine nicht dargestellte Zuführeinrichtung zur Zuführung von Wasser zur Trockensubstanz, Schlauchverbindungen 9 und weitere, hinter einem Abdeckblech 11 befindliche und daher nicht gezeigte Vorrichtungen, wie zum Beispiel ein Förder-Mischsystem, umfasst.

Für einen rollenden Transport der Mörtelmischpumpe zum jeweiligen Einsatzort weist diese vier (in Fig. 1 nur zwei dargestellt) Wagenrollen 13 auf, welche über ein Rollenblech 15 an den Rahmen 1 angekoppelt sind. Zudem befinden sich am Rahmen 1 noch Transportgriffe 17, mit deren Hilfe die Mörtelmischpumpe geschoben und ggf. angehoben werden kann. Diese Transportgriffe 17 können nach dem Aufstellen der Mörtelmischpumpe am Einsatzort von der gezeigten aktiven, horizontalen Stellung nach unten in eine vertikale Ruhestellung umgeklappt werden.

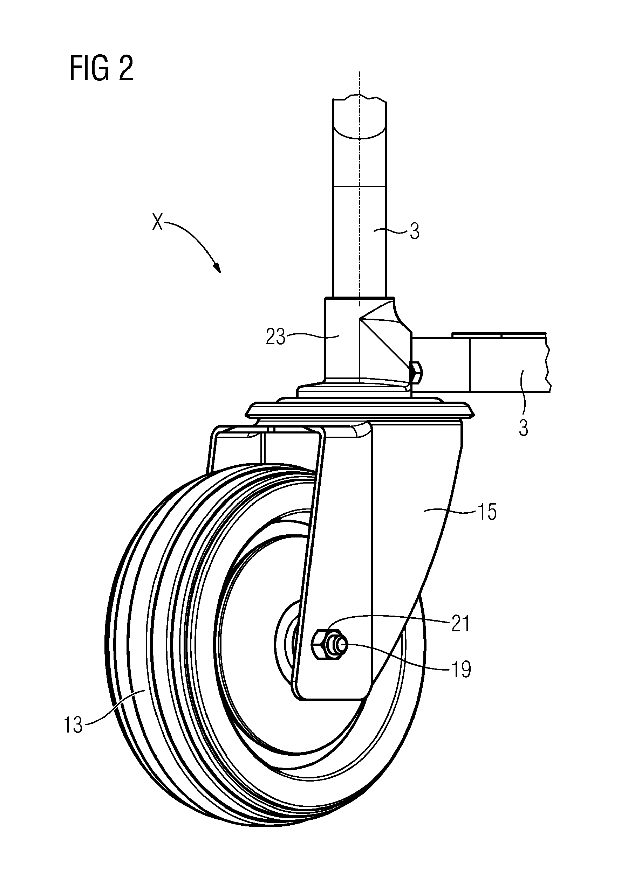

In Fig. 2 ist eine Wagenrolle 13 in vergrößerter Darstellung gezeigt. Diese ist über ihre Rollenachse 19 am Rollenblech 15 drehbar angekoppelt. Eine Achsmutter 21 fixiert die Rollenachse 19 am Rollenblech 15. Das Rollenblech 15 wiederum ist an einem Rahmeckverbinderteil 23 um eine vertikale Achse um 360° verschwenkbar angesetzt. Mit Hilfe dieser Verschwenkbarkeit lässt sich der Rollenwagen in jede beliebige Richtung lenken, wobei für ein einfaches Lenken die vertikale Schwenkachse und Rollenachse 19 nicht in einer Ebene liegen und dadurch durch geeignetes Bewegen des Rollenwagens am Rahmen 1 oder an den Transportgriffen 17 die Wagenrolle 13 in die gewünschte Bewegungsrichtung ausgerichtet werden kann.

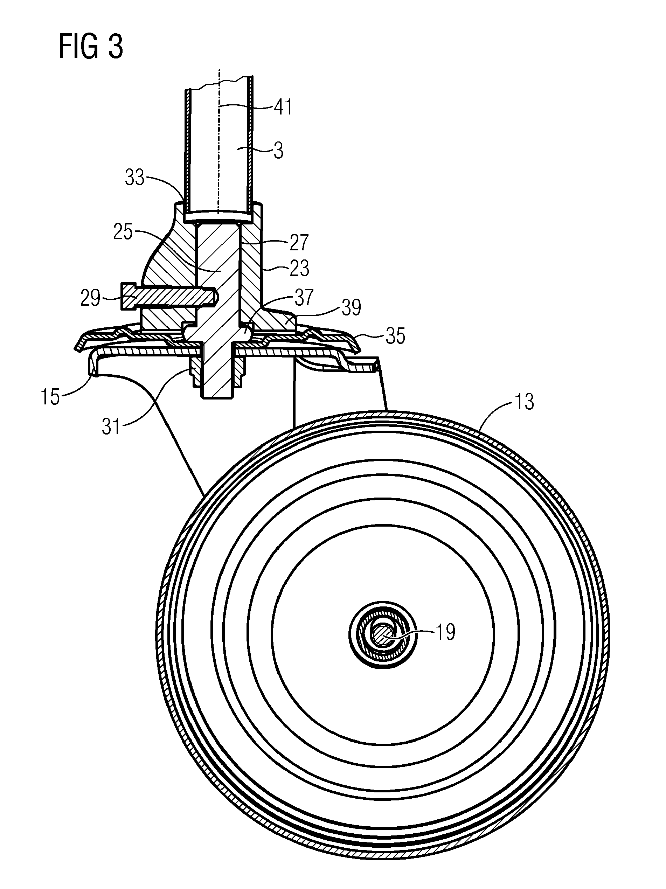

In der Querschnittsansicht gemäß Fig. 3 ist das Ansetzen des Rollenblechs 15 am Rahmeneckverbinderteil 23 näher gezeigt. Das Rollenblech 15 ist über einen Radzapfen 25 an dessen erstem Ende in eine entsprechende Aufnahme 27 in das Rahmeckverbinderteil 23 eingesetzt und mittels einer Sicherungsschraube 29 verankert. Um der Wagenrolle 13 die 360°-Verschwenkung zu ermöglichen, ist der Radzapfen 25 an seinem zweiten Ende am Rollenblech 15 mit einer selbstsichernden Mutter 31 gesichert und fixiert.

Das Rahmeneckverbinderteil 23 nimmt ferner die Enden der Rahmenteile, also der Metallrohre 3, auf. Hierzu ist für jedes angekoppelte Metallrohr 3 eine entsprechende Aussparung 33 vorgesehen. Nach dem Einsetzen des Metallrohres 3 während der Rahmenmontage wird eine nicht dargestellte Schweißnaht gesetzt um eine unlösbare Verbindung zur Herstellung eines stabilen Rahmens 1 zu gewährleisten.

Zwischen Rahmeneckverbinderteil 23 und Rollenblech 15 ist ein tellerförmiges Abstützblech 35 angeordnet. Es weist mittig einen kreisförmigen Durchbruch auf, durch den das zweite Ende des Radzapfens 25 durchgeführt ist. Fixiert wird das Abstützblech 35 dadurch, dass der Radzapfen 25 einen ebenfalls kreisförmigen Kragen 37 umfasst, welcher das erste und das zweite Ende des Radzapfens 25 voneinander trennt, wobei das Abstützblech 35 zwischen Kragen 37 und Rollenblech 15 eingeklemmt ist. Zusätzlich, jedoch nicht in den Figuren dargestellt, ist es möglich, zwischen Abstützblech 35 und Rollenblech 15 eine Kugellagerverbindung vorzusehen, die eine Drehung des Abstützblechs 35 relativ zum Rollenblech 15 erlaubt, sowie gleichzeitig eine Krafteinleitung aus dem Abstützblech 35 in das Rollenblech 15 ermöglicht. Diese Kugellagerverbindung kann ein- oder mehrreihig ausgeführt sein.

Das Rahmeneckverbinderteil 23 ist an seiner Unterseite mit einem Fuß 39 versehen, welcher eine unterseitige Verbreiterung des Rahmeneckverbinderteils 23 darstellt. Die obere Fläche des Abstützbleches 35 wirkt mit der Unterseite des Fußes 39 derart zusammen, dass sich eine großflächige Abstützung der Wagenrollenanordnung gegenüber dem Rahmen 1 ergibt. Wenn die Wagenrolle 13 beim rollenden Transport des Rollwagens gegen ein Hindernis stößt und auf diese Weise eine Auslenkung in horizontaler Richtung, also senkrecht zur Achse 41 des vertikalen Metallrohrs 3, an dem das Rahmeneckverbinderteil 23 angekoppelt ist, erfährt, so wird eine Biegebelastung des Radzapfens 25 dadurch gering gehalten, dass sich die Oberseite des Abstützblechs 35 an der Unterseite des Fußes 39 abstützt und dadurch die Biegebewegung der Wagenrolle 13 gegenüber dem Rahmen 1 bremst. Die Gefahr eines Bruchs des Radzapfens 25 ist somit besonders gering gehalten.

Der Fuß 39 kann auch als Standfläche für den Rollwagen dienen. Sollte die Mörtelmischpumpe längere Zeit an einem Einsatzort oder an einem Lagerort verbleiben, so können die Wagenrollen 13, insbesondere um einen Diebstahl der Maschine zu erschweren, vom Rahmeneckverbinderteil 23 abgenommen werden. Hierzu müssen lediglich die Sicherungsschrauben 29 gelöst, die Maschine an den Transportgriffen 17 angehoben und die Wagenrollen 13 abgenommen werden.

### Bezugszeichenliste

- 1: Rahmen
- 3: Metallrohr
- 5: Einfüllbehälter
- 7: Luftkompressor
- 9: Schlauchverbindung
- 11: Abdeckblech
- 13: Wagenrolle
- 15: Rollenblech
- 17: Transportgriff
- 19: Rollenachse
- 21: Achsmutter
- 23: Rahmeneckverbinderteil
- 25: Radzapfen
- 27: Aufnahme
- 29: Sicherungsschraube
- 31: selbstsichernde Mutter
- 33: Aussparung
- 35: Abstützblech
- 37: Kragen
- 39: Fuß
- 41: Achse

## Patentansprüche

1. Rollwagen für eine Maschine, insbesondere für eine Baumaschine, zum Beispiel eine Mörtelmischmaschine oder -mischpumpe, mit einem Rahmen (1) aus miteinander verbundenen Rahmenteilen (3), mit auf oder an dem Rahmen (1) angeordneten Maschinenkomponenten (5, 7, 9, 11) und mit wenigstens einer Wagenrolle (13), **dadurch gekennzeichnet, dass** der Rahmen (1) wenigstens ein Verbinderteil (23) zum Verbinden von wenigstens zwei Rahmenteilen (3) umfasst, an dem die Wagenrolle (13) angekoppelt oder ankoppelbar ist.

2. Rollwagen nach Anspruch 1, **dadurch gekennzeichnet, dass** das Verbinderteil (23) Aussparungen (33) zur Aufnahme oder zum Einfügen von Endbereichen der Rahmenteile (3) aufweist.

3. Rollwagen nach Anspruch 1 oder 2, **dadurch gekennzeichnet, dass** das Verbinderteil (23) massiv ausgeführt ist.

4. Rollwagen nach einem der Ansprüche 1 bis 3, **dadurch gekennzeichnet, dass** das Verbinderteil (23) ein Gussteil, insbesondere ein Metallgussteil, ist.

5. Rollwagen nach einem der Ansprüche 1 bis 4, **dadurch gekennzeichnet, dass** die Rahmenteile aus Metallrohren (3) oder -stäben bestehen oder Metallrohre (3) oder -stäbe umfassen und die Metallrohre (3) oder -stäbe mit dem Verbinderteil (23) verschweißt, verlötet oder verschraubt sind.

6. Rollwagen nach einem der Ansprüche 1 bis 5, **dadurch gekennzeichnet, dass** das Verbinderteil (23) eine Aufnahme (27) für einen Radzapfen (25) der Wagenrolle (13) zum insbesondere axial verschwenkbaren Ankoppeln derselben aufweist.

7. Rollwagen nach Anspruch 6, **dadurch gekennzeichnet, dass** die Richtungsvektoren von Radzapfen (25) und Wagenrollenachse orthogonal zueinander sind.

8. Rollwagen nach Anspruch 7, **dadurch gekennzeichnet, dass** der Radzapfen (25) und Wagenrollenachse in einer windschiefen Anordnung sind.

9. Rollwagen nach einem der Ansprüche 1 bis 8, **dadurch gekennzeichnet, dass** der Rahmen (1) eine Aufnahme für einen Radzapfen (25) der Wagenrolle (13) zum insbesondere axial verschwenkbaren Ankoppeln derselben aufweist, wobei der Rahmen (1) an der Ankoppelstelle eine flächenförmige, insbesondere tellerförmige, Verbreiterung (39) aufweist, die mit einer flächenförmigen, insbesondere tellerförmigen, Verbreiterung (35) an einem Rollenblech (15) der Wagenrolle (13) zusammenwirkt.

10. Rollwagen nach Anspruch 9, **dadurch gekennzeichnet, dass** die Verbreiterung (39) am Rahmen (1) am Verbinderteil (23) nach einem der Ansprüche 1 bis 8 angeordnet ist.

11. Rollwagen nach Anspruch 9 oder 10, **dadurch gekennzeichnet, dass** die Verbreiterung (35) am Rollenblech (15) in diesem integriert ist.

12. Rollwagen nach Anspruch 9 oder 10, **dadurch gekennzeichnet, dass** die Verbreiterung (35) am Rollenblech (15) ein auf dem Rollenblech (15) aufgesetztes, insbesondere aus einem Metallblech hergestelltes, Aufsatzteil ist.

13. Rollwagen nach einem der Ansprüche 9 bis 12, **dadurch gekennzeichnet, dass** einander zugewandte Flächen der Verbreiterung (39) des Rahmens (1) und der Verbreiterung (35) des Rollenblechs (15) flächig aufeinander aufliegen oder einen besonders geringen Abstand zueinander aufweisen.

14. Rollwagen nach Anspruch 13, **dadurch gekennzeichnet, dass** einander zugewandte Flächen der Verbreiterung (39) des Rahmens (1) und der Verbreiterung (35) des Rollenblechs (15) bei angekoppelter Wagenrolle (13) parallel zueinander ausgerichtet sind.

15. Rollwagen nach Anspruch 13 oder 14, **dadurch gekennzeichnet, dass** der Abstand der einander zugewandten Flächen im Bereich von 0 mm und 5 mm liegt.
